(19)

Europäisches Patentamt

European Patent Office

Office européen des brevets

(11) **EP 4 707 734 A1**

(12) **EUROPEAN PATENT APPLICATION**
published in accordance with Art. 153(4) EPC

(43) Date of publication:
**11.03.2026 Bulletin 2026/11**

(21) Application number: **24939065.9**

(22) Date of filing: **26.11.2024**

(51) International Patent Classification (IPC):
*G01C 1/02* (2006.01)   *G06F 17/14* (2006.01)
*G01C 3/00* (2006.01)

(52) Cooperative Patent Classification (CPC):
Y02A 90/10

(86) International application number:
**PCT/CN2024/134662**

(87) International publication number:
**WO 2025/256060 (18.12.2025 Gazette 2025/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.06.2024 CN 202410747406**

(71) Applicant: **CRSC Research & Design Institute
Group Co., Ltd.
Beijing 100070 (CN)**

(72) Inventors:
• **NING, Yunzhuan
Beijing 100070 (CN)**

• **BAO, Pengyu
Beijing 100070 (CN)**
• **CHEN, Zhiqiang
Beijing 100070 (CN)**
• **WANG, Jianmin
Beijing 100070 (CN)**
• **GU, Lingfeng
Beijing 100070 (CN)**

(74) Representative: **Meissner Bolte Partnerschaft
mbB
Patentanwälte Rechtsanwälte
Postfach 86 06 24
81633 München (DE)**

(54) **METHOD AND APPARATUS FOR DETERMINING DISTANCE ON BASIS OF LONGITUDE AND
LATITUDE**

(57)   The present disclosure provides a method and apparatus for determining a distance according to longitude and latitude, a computer-readable storage medium, and an electronic device, and relates to the technical field of distance measurement and calculation. The method includes: obtaining longitude *lon*1 and latitude *lat*1 of a first position and longitude *lon2* and latitude *lat2* of a second position; determining a longitude difference *dlon* and a latitude difference *dlat* between the second position and the first position; determining a weight coefficient based on the latitude *lat*1 of the first position, the latitude *lat2* of the second position, the longitude difference *dlon,* and the latitude difference *dlat;* and determining a distance between the first position and the second position based on the weight coefficient and an earth radius. The method improves calculation efficiency, and uses integer data in a calculation process on the premise of satisfying an accuracy requirement. This is applicable to the situation that many calculation platforms cannot use floating-point numbers.

EP 4 707 734 A1

**(Cont. next page)**

```
┌─────────────────────────────────────────────────┐
│ Obtain longitude *lon*1 and latitude *lat*1 of a first │        S101
│ position and longitude *lon*2 and latitude *lat*2 of a │  ⌇
│                  second position                 │
└─────────────────────────────────────────────────┘
                        │
                        ▼
┌─────────────────────────────────────────────────┐
│ Determine a longitude difference *dlon* and a latitude │        S102
│ difference *dlat* between the second position and the │  ⌇
│                  first position                  │
└─────────────────────────────────────────────────┘
                        │
                        ▼
┌─────────────────────────────────────────────────┐
│ Determine a weight coefficient based on the latitude │
│ *lat*1 of the first position, the latitude *lat*2 of the │        S103
│ second position, the longitude difference *dlon*, and │  ⌇
│           the latitude difference *dlat*           │
└─────────────────────────────────────────────────┘
                        │
                        ▼
┌─────────────────────────────────────────────────┐
│ Determine a distance between the first position and │        S104
│ the second position based on the weight coefficient │  ⌇
│                 and an earth radius              │
└─────────────────────────────────────────────────┘
```

FIG. 1

**Description**

**TECHNICAL FIELD**

The present disclosure relates to the technical field of distance measurement and calculation, and particularly relates to a method and apparatus for determining a distance according to longitude and latitude, a computer-readable storage medium, and an electronic device.

**BACKGROUND**

In practical application, it is necessary to calculate an accurate geographical distance (arc length) between two points according to longitude and latitude in most cases. However, a distance calculation method in the prior art is complicated in calculation of a distance between two points. Moreover, accuracy of a distance calculation result is greatly reduced when calculation platforms cannot use floating-point numbers. This cannot satisfy a calculation accuracy requirement.

**SUMMARY**

In view of the above problems, the present disclosure provides a method and apparatus for determining a distance according to longitude and latitude, a computer-readable storage medium, and an electronic device, and uses integer data in a calculation process on the premise of satisfying an accuracy requirement, thus improving calculation efficiency.

A first aspect provides a method for determining a distance according to longitude and latitude. The method includes:

obtaining longitude *lon*1 and latitude *lat*1 of a first position and longitude *lon2* and latitude *lat2* of a second position;
determining a longitude difference *dlon* and a latitude difference *dlat* between the second position and the first position;
determining a weight coefficient based on the latitude *lat*1 of the first position, the latitude *lat2* of the second position, the longitude difference *dlon,* and the latitude difference *dlat*; and
determining a distance between the first position and the second position based on the weight coefficient and an earth radius.

Further, in the determining a weight coefficient based on the latitude *lat*1 of the first position, the latitude *lat2* of the second position, the longitude difference *dlon,* and the latitude difference *dlat,* a specific formula is as follows:

$$a = \left(\frac{dlat}{2}\right)^2 * 2^{19} * 2^{19} + \cos(lat1) * \cos(lat2) * \left(\frac{dlon}{2}\right)^2,$$

where
*a* denotes the weight coefficient.

Further, in the determining a distance between the first position and the second position based on the weight coefficient and an earth radius, a specific formula is as follows:

$$distance = 2 * \sqrt{a} * \frac{1}{2^{19}} * \frac{1}{60*60*1000} * \frac{\pi}{180} * r * 100000 \text{ (cm)},$$

where
*distance* denotes the distance between the first position and the second position.

A second aspect provides an apparatus for determining a distance according to longitude and latitude. The apparatus includes:

an obtainment module configured to obtain longitude *lon*1 and latitude *lat*1 of a first position and longitude *lon2* and latitude *lat2* of a second position; and
a determination module configured to determine a longitude difference *dlon* and a latitude difference *dlat* between the second position and the first position.

The determination module is further configured to determine a weight coefficient based on the latitude *lat*1 of the first position, the latitude *lat*2 of the second position, the longitude difference *dlon,* and the latitude difference *dlat.*

The determination module is further configured to determine a distance between the first position and the second position based on the weight coefficient and an earth radius.

Further, the determination module is further configured to execute the following step: determining the weight coefficient based on the following formula:

$$a = \left(\frac{dlat}{2}\right)^2 * 2^{19} * 2^{19} + \cos(lat1) * \cos(lat2) * \left(\frac{dlon}{2}\right)^2 ,$$

where
*a* denotes the weight coefficient.

Further, the determination module is further configured to execute the following step: determining the distance between the first position and the second position based on the following formula:

$$distance = 2 * \sqrt{a} * \frac{1}{2^{19}} * \frac{1}{60*60*1000} * \frac{\pi}{180} * r * 100000 \ (\text{cm}) ,$$

where *distance* denotes the distance between the first position and the second position.

A third aspect provides a computer-readable storage medium. The computer-readable storage medium stores a program or an instruction. When the program or instruction runs on a computer, the computer is caused to execute the method for determining a distance according to longitude and latitude according to any one of the solutions.

A fourth aspect provides an electronic device. The electronic device includes a processor. The processor is coupled to a memory.

The processor is configured to read and execute a computer program stored in the memory, so as to implement the method for determining a distance according to longitude and latitude according to any one of the solutions.

One or more technical solutions provided by the present disclosure at least have the following technical effects or advantages:

The method combines a haversine formula and a CORDIC (coordinate rotation digital computer) algorithm, and improves a traditional algorithm for calculating a geographical distance according to longitude and latitude. The improved algorithm can adjust accuracy of a calculation result according to an external requirement, such that complexity of a programming algorithm is reduced, and calculation efficiency of the algorithm is improved. In addition, the algorithm uses integer data in a calculation process on the premise of satisfying an accuracy requirement. This is applicable to the situation that many calculation platforms cannot use floating-point numbers.

Other features and advantages of the present disclosure will be illustrated in the following description, and some of them are obvious in the description, or are known through implementation of the present disclosure. An objective and other advantages of the present disclosure can be achieved and obtained through structures indicated in the description, claims and accompanying drawings.

## BRIEF DESCRIPTION OF THE DRAWINGS

In order to more clearly describe a technical solution in examples of the present disclosure or in the prior art, accompanying drawings required for the description of the examples or the prior art will be briefly introduced below. Obviously, the accompanying drawings in the following description are some examples of the present disclosure. Those of ordinary skill in the art can derive other accompanying drawings from these accompanying drawings without making inventive efforts.

FIG. 1 is a schematic flowchart of a method for determining a distance according to longitude and latitude according to an example of the present disclosure.
FIG. 2 is a schematic diagram of a unit circle in an example of the present disclosure.
FIG. 3 is a schematic structural diagram of an apparatus for determining a distance according to longitude and latitude according to an example of the present disclosure.
FIG. 4 is a schematic structural diagram of an electronic device according to an example of the present disclosure.

## DETAILED DESCRIPTION OF EMBODIMENTS

To make objectives, technical solutions and advantages of examples of the present disclosure clearer, the technical solutions in the examples of the present disclosure will be clearly and completely described below in conjunction with accompanying drawings in the examples of the present disclosure. Obviously, the described examples are some examples rather than all the examples of the present disclosure. Based on the examples of the present disclosure, all the other examples obtained by those of ordinary skill in the art without any creative effort fall within the protection scope of the present disclosure.

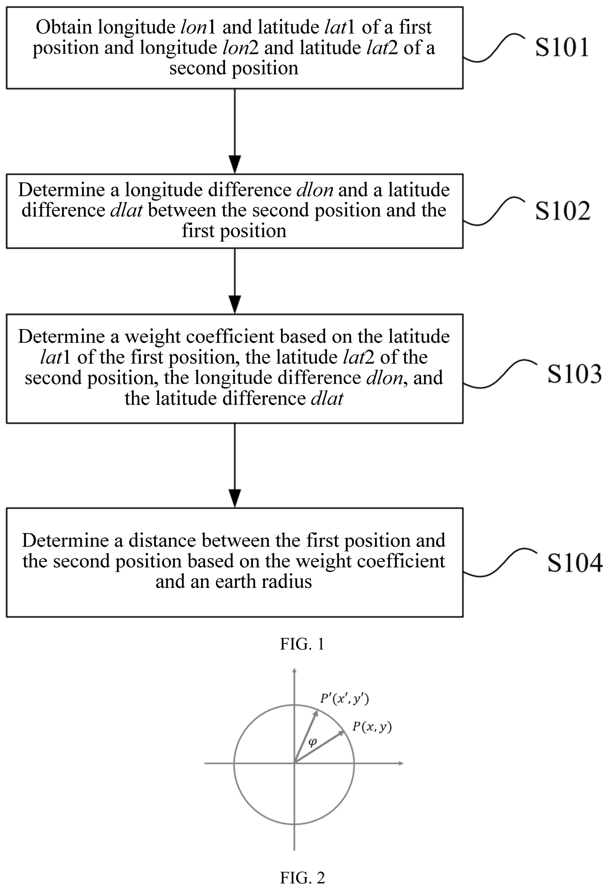

FIG. 1 is a schematic flowchart of a method for determining a distance according to longitude and latitude according to an example of the present disclosure. As shown in FIG. 1, the method for determining a distance according to longitude and latitude according to the example of the present disclosure includes the following steps:

S101: longitude *lon1* and latitude *lat*1 of a first position and longitude *lon2* and latitude *lat*2 of a second position are obtained.

S102: a longitude difference *dlon* and a latitude difference *dlat* between the second position and the first position are determined.

In the step,

$dlon = lon2 - lon1$, and
$dlat = lat2 - lat1$

S103: a weight coefficient is determined based on the latitude *lat*1 of the first position, the latitude *lat*2 of the second position, the longitude difference *dlon,* and the latitude difference *dlat.*

A specific formula is as follows:

$$a = \left(\frac{dlat}{2}\right)^2 * 2^{19} * 2^{19} + \cos(lat1) * \cos(lat2) * \left(\frac{dlon}{2}\right)^2 ,$$

where
*a* denotes the weight coefficient.

S104: a distance between the first position and the second position is determined based on the weight coefficient and an earth radius.

A specific formula is as follows:

$$distance = 2 * \sqrt{a} * \frac{1}{2^{19}} * \frac{1}{60*60*1000} * \frac{\pi}{180} * r * 100000 \; (cm) ,$$

where
*distance* denotes the distance between the first position and the second position.

A derivation process of the formula is as follows:

Longitude and latitude of the first position A is (*lon*1, *lat*1), longitude and latitude of the second position B is (*lon*2, *lat*2), and the earth radius is r.

A formula for calculating a geographical position according to longitude and latitude is combined with a haversine formula, and the following formulas may be obtained:

$$a = sin^2\left(\frac{dlat}{2}\right) + \cos(lat1) * \cos(lat2) * sin^2\left(\frac{dlon}{2}\right) \tag{1},$$

$$c = 2 * \arcsin\left(\sqrt{a}\right) \tag{2},$$

$$distance = c * r * 100000 \; (cm) \tag{3},$$

where

$$dlon = lon2 - lon1 \tag{4},$$

$$dlat = lat2 - lat1 \tag{5}.$$

In order to facilitate integer operation, the formulas (1) to (3) are transformed. A transformation process is as follows:

Considering that a longitude difference and a latitude difference between two points on the earth are very small in practical application, by combining a sine algorithm:

$$\sin(x) = x \ (x \text{ tends to } 0) \tag{6},$$

the following formulas may be obtained:

$$\sin\left(\frac{dlat}{2}\right) = \frac{dlat}{2} \tag{7},$$

$$\sin\left(\frac{dlon}{2}\right) = \frac{dlon}{2} \tag{8},$$

$$\arcsin\left(\sqrt{a}\right) = \sqrt{a} \tag{9},$$

and according to the formulas (7) to (8), the formulas (1) to (3) are transformed, and the transformed formulas are as follows:

$$a = \left(\frac{dlat}{2}\right)^2 * 2^{19} * 2^{19} + \cos(lat1) * \cos(lat2) * \left(\frac{dlon}{2}\right)^2 \tag{10},$$

$$c = 2 * \sqrt{a} \tag{11},$$

and

$$distance = c * r * 100000 \ (\text{cm}) \tag{12}.$$

From the formulas (10) to (12), it can be seen that the transformed distance calculation formula focuses on solving a cosine value. Generally, an algorithm for solving a cosine value is complicated, and requires floating-point numbers. However, many calculation platforms do not support use of the floating-point numbers. A cosine calculation formula is transformed based on a CORDIC (coordinate rotation digital computer) algorithm, such that integers are used during calculation of the cosine value. A specific derivation process is as follows:

As shown in FIG. 2, on a unit circle, a vector $P$ rotates by $\varphi$ to $P'$ (an anticlockwise direction is positive), and a coordinate rotation formula is as follows:

$$x' = x cos\varphi - y sin\varphi \tag{13},$$

$$y' = ycos\varphi + xsin\varphi \tag{14},$$

after $cos\varphi$ is extracted, it is easy to see that a geometric meaning of $cos\varphi$ is only a scaling factor,

$$x' = cos\varphi\,[x - ytan\varphi] \tag{15},$$

$$y' = cos\varphi[y + xtan\varphi] \tag{16},$$

if an angle $\theta$ is considered as the sum of a series of angles $\theta_i$, and selection of $\theta_i$ satisfies:

$$\theta = \sum_{i=0}^{\infty} \theta_i \tag{17},$$

$$\theta_i = tan^{-1}(d_i 2^{-i}) \quad d_i = \pm 1 \tag{18},$$

if a selection is as follows:

$$tan\theta_0 = 1 \tag{19},$$

$$tan\theta_1 = \frac{1}{2} \tag{20},$$

$$tan\theta_2 = \frac{1}{4} \tag{21},$$

$$tan\theta_n = \frac{1}{2^n} \tag{22},$$

a coordinate rotation formula for i-th rotation of the unit circle is as follows:

$$x_{i+1} = K_i[x_i - y_i \cdot d_i \cdot 2^{-i}] \tag{23},$$

$$y_{i+1} = K_i[y_i + x_i \cdot d_i \cdot 2^{-i}] \tag{24},$$

where

$$K_i = cos(tan^{-1}2^{-1}) = 1/\sqrt{1 + 2^{-2i}} \tag{25},$$

$$d_i = \pm 1 \tag{26},$$

to determine a value of $d_i$, a new variable z is introduced and is defined as:

$$z_{i+1} = z_i - d_i \cdot tan^{-1}(2^{-i}) \tag{27},$$

$z$ is initialized to $\theta$. That is, $z_0 = \theta$. An operation of adding or subtracting $tan^{-1}(2^{-i})$ is performed on $z_i$ according to a condition, such that a final value of $z$ is 0, and the condition is determined by $d_i$:

$$d_i = \begin{cases} +1 & z_i \geq 0 \\ -1 & z_i < 0 \end{cases} \tag{28},$$

and

an iteration process of $z$ is a process of converging $z$ to 0, and is a process of decomposing $\theta$ into a series of $\theta_i$, so $z_i$ can be considered as a remaining angle of the i-th rotation. Assuming

$$A_n = \prod_n \sqrt{1 + 2^{-2\iota}} \tag{29},$$

as a number of iterations increases, $K_i$ tends to 1, and $A_n$ tends to a stable value, specifically as shown in the following table:

| i | $\theta_i$ (arctan $(2^{-i})$, unit:° ) | $\cos\theta_i$ | $\Pi\cos\theta_i$ | $1/\Pi\cos\theta_i$ |
|---|---|---|---|---|
| 0 | 45.0 | 0.7071067812 | 0.7071067812 | 1.414213562 |
| 1 | 26.56505118 | 0.894427191 | 0.632455532 | 1.58113883 |
| 2 | 14.03624347 | 0.9701425001 | 0.6135719911 | 1.629800601 |
| 3 | 7.125016349 | 0.9922778767 | 0.6088339125 | 1.642484066 |
| 4 | 3.576334375 | 0.9980525785 | 0.6076482563 | 1.645688916 |
| 5 | 1.789910608 | 0.9995120761 | 0.6073517701 | 1.646492279 |
| 6 | 0.8951737102 | 0.999877952 | 0.6072776441 | 1.646693254 |
| 7 | 0.4476141709 | 0.9999694838 | 0.6072591123 | 1.646743507 |
| 8 | 0.2238105004 | 0.9999923707 | 0.6072544793 | 1.64675607 |
| 9 | 0.1119056771 | 0.9999980927 | 0.6072533211 | 1.646759211 |
| 10 | 0.05595289189 | 0.9999995232 | 0.6072530315 | 1.646759996 |
| 11 | 0.02797645262 | 0.9999998808 | 0.6072529591 | 1.646760193 |
| 12 | 0.01398822714 | 0.9999999702 | 0.607252941 | 1.646760242 |
| 13 | 0.006994113675 | 0.9999999925 | 0.6072529365 | 1.646760254 |
| 14 | 0.003497056851 | 0.9999999981 | 0.6072529354 | 1.646760257 |
| 15 | 0.001748528427 | 0.9999999995 | 0.6072529351 | 1.646760258 |

Thus, if $K_i = cos(tan^{-1}2^{-i})$ is ignored in an iteration formula, the following can be obtained:

$$x_{i+1} = x_i - y_i \cdot d_i \cdot 2^{-1} \tag{30},$$

$$y_{i+1} = y_i + x_i \cdot d_i \cdot 2^{-1} \tag{31},$$

$$z_{i+1} = z_i - d_i \cdot tan^{-1}(2^{-1}) \tag{32},$$

$$d_i = \begin{cases} +1 & z_i \geq 0 \\ -1 & z_i < 0 \end{cases} \tag{33},$$

by comprehensively considering the formulas (13) to (33), the following results can be obtained:

$$x_n = A_n[x_0 \cos z_0 - y_0 \sin z_0] \qquad (34),$$

$$y_n = A_n[y_0 \cos z_0 + x_0 \sin z_0] \qquad (35),$$

$$z_n = 0 \qquad (36),$$

$$A_n = \prod_n \sqrt{1 + 2^{-2i}} \qquad (37),$$

from the formulas (34) to (37), it can be seen that, assuming

$$y_0 = 0 \qquad (38),$$

$$x_0 = \frac{1}{A_n} \qquad (39),$$

a final result of iteration is as follows:

$$x_n = \cos z_0 = \cos\theta \qquad (40),$$

and it is known that 1 degree of longitude and latitude is 3600 seconds, 45 degrees of longitude and latitude is 162,000 seconds, and other degrees are rounded in the same manner. Because $\theta_{18} = 1s$, a number of iterations is 19 times.

$$x_0 = \frac{1}{A_n} * 2^{19} = 0.607253 * 2^{19} = 318375$$

is used,
that is, $x_n = \cos z_0 = \cos\theta$ obtained by iteration is amplified by $2^{19}$ times, to ensure accuracy of integer operation in an iteration process. *dlon* and *dlat* are in milliseconds.

Thus, a distance formula is changed to:

$$a = \left(\frac{dlat}{2}\right)^2 * 2^{19} * 2^{19} + \cos(lat1) * \cos(lat2) * \left(\frac{dlon}{2}\right)^2 \qquad (41),$$

and

$$distance = 2 * \sqrt{a} * \frac{1}{2^{19}} * \frac{1}{60*60*1000} * \frac{\pi}{180} * r * 100000 \ (cm) \qquad (42).$$

The formulas (41) and (42) are improved fast algorithms for calculating a geographical distance according to longitude and latitude, and use integer data in a calculation process.

Different platforms have different calculation abilities, and different situations have different accuracy requirements for calculation results. Thus, when a is calculated, a cos value can be reduced by a multiple according to a calculation ability of a platform and an accuracy requirement of a calculation result, so as to prevent a from overflowing in a calculation process. In this way, both the calculation ability of the platform and the calculation accuracy requirement can be satisfied, and reduction by a multiple can lead to loss of calculation accuracy. For instance,

$$\cos(lat1) = \cos(lat1)/2^6 \qquad (43),$$

and

$$\cos(lat2) = \cos(lat2)/2^6 \qquad (44).$$

Then, a fast algorithm for calculating a geographical distance according to longitude and latitude is changed to:

$$a = \left(\frac{dlat}{2}\right)^2 * 2^{(19-6)} * 2^{(19-6)} + \cos(lat1) * \cos(lat2) * \left(\frac{dlon}{2}\right)^2 \qquad (45),$$

and

$$distance = 2 * \sqrt{a} * \frac{2^6}{2^{19}} * \frac{1}{60 * 60 * 1000} * \frac{\pi}{180} * r * 100000 \ (cm) \qquad (46).$$

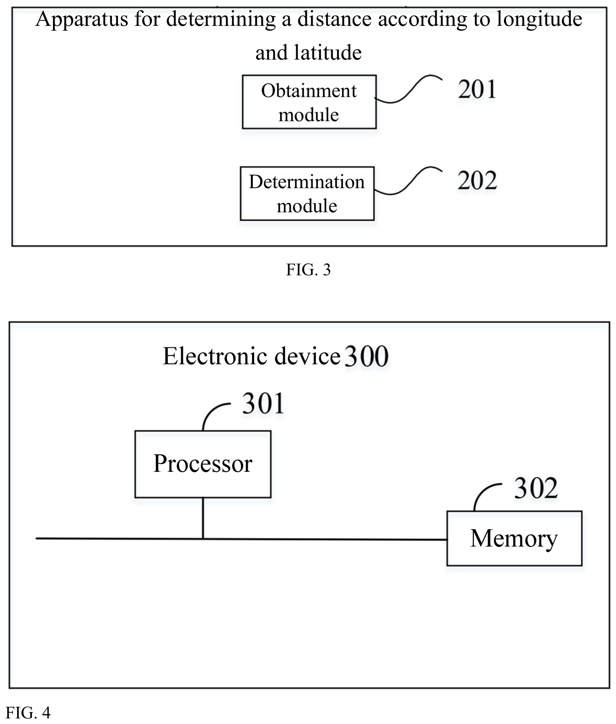

FIG. 3 is a schematic structural diagram of an apparatus for determining a distance according to longitude and latitude according to an example of the present disclosure. An example of the present disclosure further provides an apparatus for determining a distance according to longitude and latitude. As shown in FIG. 3, the apparatus includes:

an obtainment module 201 configured to obtain longitude $lon1$ and latitude $lat1$ of a first position and longitude $lon2$ and latitude $lat2$ of a second position;
a determination module 202 configured to determine a longitude difference $dlon$ and a latitude difference $dlat$ between the second position and the first position;
the determination module 202 is further configured to determine a weight coefficient based on the latitude $lat1$ of the first position, the latitude $lat2$ of the second position, the longitude difference $dlon,$ and the latitude difference $dlat;$ and
the determination module 202 is further configured to determine a distance between the first position and the second position based on the weight coefficient and an earth radius.

It should be noted herein that the obtainment module 201 and the determination module 202 correspond to S101 to S104 in the examples of the method for determining a distance according to longitude and latitude. The modules have identical implementation instances and application scenes to the corresponding steps, and are not limited by the content disclosed in the examples.

The technical solutions in the examples of the present disclosure at least have the following technical effects or advantages:

The algorithm combines a haversine formula and a CORDIC algorithm, and improves a traditional algorithm for calculating a geographical distance according to longitude and latitude. The improved algorithm can adjust accuracy of a calculation result according to an external requirement, such that complexity of a programming algorithm is reduced, and calculation efficiency of the algorithm is improved. In addition, the algorithm uses integer data in a calculation process on the premise of satisfying an accuracy requirement. This is applicable to the situation that many calculation platforms cannot use floating-point numbers.

An example of the present disclosure further provides a computer-readable storage medium. The computer-readable storage medium stores a program or an instruction. When the program or instruction runs on a computer, the computer is caused to execute the method for determining a distance according to longitude and latitude according to Example 1.

FIG. 4 is a schematic structural diagram of an electronic device according to an example of the present disclosure. An example of the present disclosure further provides an electronic device. As shown in FIG. 4, the electronic device includes a processor 301. The processor 301 is coupled to a memory 302.

The processor 301 is configured to read and execute a computer program stored in the memory, so as to implement the method for determining a distance according to longitude and latitude according to the method examples.

Although the present disclosure is described in detail with reference to the above examples, those of ordinary skill in the art should understand that the technical solutions described in the examples can still be modified, and alternatively, some of the technical features therein can be equivalently substituted. However, these modifications or substitutions do not enable the essence of the corresponding technical solutions to deviate from the spirit and scope of the technical solutions of all the examples of the present disclosure.

**Claims**

1. A method for determining a distance according to longitude and latitude, **characterized by** comprising:

    obtaining longitude *lon1* and latitude *lat1* of a first position and longitude *lon2* and latitude *lat2* of a second position;
    determining a longitude difference *dlon* and a latitude difference *dlat* between the second position and the first position;
    determining a weight coefficient based on the latitude *lat1* of the first position, the latitude *lat2* of the second position, the longitude difference *dlon,* and the latitude difference *dlat;* and
    determining a distance between the first position and the second position based on the weight coefficient and an earth radius.

2. The method according to claim 1, **characterized in that**

    in the determining a weight coefficient based on the latitude *lat1* of the first position, the latitude *lat2* of the second position, the longitude difference *dlon,* and the latitude difference *dlat,* a specific formula is as follows:

$$a = \left(\frac{dlat}{2}\right)^2 * 2^{19} * 2^{19} + \cos(lat1) * \cos(lat2) * \left(\frac{dlon}{2}\right)^2 ,$$

    wherein
    *a* denotes the weight coefficient.

3. The method according to claim 2, **characterized in that**

    in the determining a distance between the first position and the second position based on the weight coefficient and an earth radius, a specific formula is as follows:

$$distance = 2 * \sqrt{a} * \frac{1}{2^{19}} * \frac{1}{60*60*1000} * \frac{\pi}{180} * r * 100000 \text{ (cm)} ,$$

    wherein
    *distance* denotes the distance between the first position and the second position.

4. An apparatus for determining a distance according to longitude and latitude, **characterized by** comprising:

    an obtainment module configured to obtain longitude *lon1* and latitude *lat1* of a first position and longitude *lon2* and latitude *lat2* of a second position; and
    a determination module configured to determine a longitude difference *dlon* and a latitude difference *dlat* between the second position and the first position, wherein
    the determination module is further configured to determine a weight coefficient based on the latitude *lat1* of the first position, the latitude *lat2* of the second position, the longitude difference *dlon,* and the latitude difference *dlat;* and
    the determination module is further configured to determine a distance between the first position and the second position based on the weight coefficient and an earth radius.

5. The apparatus according to claim 4, **characterized in that**
    the determination module is further configured to execute the following step:
    determining the weight coefficient based on the following formula:

$$a = \left(\frac{dlat}{2}\right)^2 * 2^{19} * 2^{19} + \cos(lat1) * \cos(lat2) * \left(\frac{dlon}{2}\right)^2,$$

wherein $a$ denotes the weight coefficient.

6. The apparatus according to claim 5, **characterized in that**
   the determination module is further configured to execute the following step:
   determining the distance between the first position and the second position based on the following formula:

$$distance = 2 * \sqrt{a} * \frac{1}{2^{19}} * \frac{1}{60*60*1000} * \frac{\pi}{180} * r * 100000 \ (cm),$$

wherein *distance* denotes the distance between the first position and the second position.

7. A computer-readable storage medium, **characterized by** storing a program or an instruction, wherein when the program or instruction runs on a computer, the computer is caused to execute the method for determining a distance according to longitude and latitude according to any one of claims 1 to 3.

8. An electronic device, **characterized by** comprising a processor, wherein the processor is coupled to a memory, and the processor is configured to read and execute a computer program stored in the memory, so as to implement the method for determining a distance according to longitude and latitude according to any one of claims 1 to 3.

Obtain longitude *lon*1 and latitude *lat*1 of a first position and longitude *lon*2 and latitude *lat*2 of a second position ⟩ S101

Determine a longitude difference *dlon* and a latitude difference *dlat* between the second position and the first position ⟩ S102

Determine a weight coefficient based on the latitude *lat*1 of the first position, the latitude *lat*2 of the second position, the longitude difference *dlon*, and the latitude difference *dlat* ⟩ S103

Determine a distance between the first position and the second position based on the weight coefficient and an earth radius ⟩ S104

FIG. 1

FIG. 2

Apparatus for determining a distance according to longitude
and latitude

Obtainment
module — 201

Determination
module — 202

FIG. 3

Electronic device 300

Processor — 301

Memory — 302

FIG. 4

EP 4 707 734 A1

## INTERNATIONAL SEARCH REPORT

| | International application No. |
|---|---|
| | **PCT/CN2024/134662** |

### A. CLASSIFICATION OF SUBJECT MATTER

G01C1/02(2006.01)i; G06F17/14(2006.01)i; G01C3/00(2006.01)i

According to International Patent Classification (IPC) or to both national classification and IPC

### B. FIELDS SEARCHED

Minimum documentation searched (classification system followed by classification symbols)

IPC: G01C G06F

Documentation searched other than minimum documentation to the extent that such documents are included in the fields searched

Electronic data base consulted during the international search (name of data base and, where practicable, search terms used)

CNTXT: WPABSC; ENTXTC; CNKI; VEN; WPABS; ENTXT: 经, 纬, 距离, 间距, 间隔, 精度, 迭代, 权重, 系数, 半正矢, 差, 浮点, 整型, 次方, 指数, haversine, cordic, longitude, latitude, distance, spacing, interval, precision, iteration, weight, coefficient, difference, floating point, integer, exponent

### C. DOCUMENTS CONSIDERED TO BE RELEVANT

| Category* | Citation of document, with indication, where appropriate, of the relevant passages | Relevant to claim No. |
|---|---|---|
| PX | CN 118758251 A (CRSC RESEARCH & DESIGN INSTITUTE GROUP CO., LTD.) 11 October 2024 (2024-10-11) description, paragraphs [0003]-[0130], and figures 1-4 | 1-8 |
| X | CN 113012047 A (GUANGZHOU FUAN ELECTRONIC TECHNOLOGY CO., LTD.) 22 June 2021 (2021-06-22) description, paragraphs [0006]-[0143], and figures 1-5 | 1, 2, 4, 5, 7, 8 |
| A | CN 113543255 A (FUJIAN NEWLAND SOFTWARE ENGINEERING CO., LTD.) 22 October 2021 (2021-10-22) entire document | 1-8 |
| A | CN 116050184 A (INSTITUTE OF GEOGRAPHIC SCIENCES AND NATURAL RESOURCES RESEARCH, CHINESE ACADEMY OF SCIENCES) 02 May 2023 (2023-05-02) entire document | 1-8 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2025** | **02 March 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/134662**

**C.  DOCUMENTS CONSIDERED TO BE RELEVANT**

| Category* | Citation of document, with indication, where appropriate, of the relevant passages | Relevant to claim No. |
|---|---|---|
| A | CN 111856395 A (NANJING YIXIN TONGLIAN TECHNOLOGY CO., LTD.) 30 October 2020 (2020-10-30)<br>entire document | 1-8 |
| A | WO 2024012006 A1 (TENCENT TECHNOLOGY (SHENZHEN) CO., LTD.) 18 January 2024 (2024-01-18)<br>entire document | 1-8 |

Form PCT/ISA/210 (second sheet) (July 2022)

**INTERNATIONAL SEARCH REPORT**
Information on patent family members

International application No.

**PCT/CN2024/134662**

| Patent document cited in search report | | | Publication date (day/month/year) | Patent family member(s) | Publication date (day/month/year) |
|---|---|---|---|---|---|
| CN | 118758251 | A | 11 October 2024 | None | |
| CN | 113012047 | A | 22 June 2021 | None | |
| CN | 113543255 | A | 22 October 2021 | None | |
| CN | 116050184 | A | 02 May 2023 | None | |
| CN | 111856395 | A | 30 October 2020 | None | |
| WO | 2024012006 | A1 | 18 January 2024 | None | |

Form PCT/ISA/210 (patent family annex) (July 2022)